# FASCICULE DE BREVET EUROPEEN

(11) **EP 3 670 314 B1**
(45) Date de publication et mention de la délivrance du brevet: **16.06.2021**
(21) Numéro de dépôt: 19212599.5
(22) Date de dépôt: 29.11.2019
(51) Int. Cl.: B62K 15/00

(54) **CHARNIÈRE POUR VÉLO PLIANT**
SCHARNIER FÜR EIN KLAPPFAHRRAD.
HINGE FOR FOLDING BIKE

(30) Priorité: 21.12.2018 FR 1873934
(43) Date de publication de la demande: 24.06.2020
(73) Titulaire: Decathlon, 59650 Villeneuve d'Ascq (FR)
(72) Inventeur: POUPART, François, 59650 VILLENEUVE D'ASCQ (FR); BASSETTI, Pierre-Louis, 59650 VILLENEUVE D'ASCQ (FR); RIBEIRO, David, 59136 WAVRIN (FR)
(74) Mandataire: Cabinet Beau de Loménie

(56) Documents cités:
- EP-A1- 3 263 434
- CN-Y- 201 235 892
- US-A- 4 462 606

## Description

### Domaine Technique

La présente invention concerne le domaine des vélos pliants et plus précisément les dispositifs de pliage et de maintien en position dépliée pour de tels vélos pliants.

### Technique antérieure

Les vélos pliants comprennent de manière traditionnelle au moins une charnière permettant de placer en position pliée ou dépliée un ensemble tubulaire constitué d'une première portion de tube et d'une seconde portion de tube. Il est connu de disposer de telles charnières sur la potence, le cadre ou encore la tige de selle du vélo pliant.

Les charnières de vélos pliants doivent permettre à l'utilisateur de placer très rapidement le vélo en position pliée, pour pouvoir le ranger ou pour en réduire l'encombrement afin de pouvoir le porter facilement, notamment lorsque l'utilisateur souhaite se déplacer en transport en commun.

Par ailleurs, il est indispensable de pouvoir maintenir le vélo, et plus précisément les différentes portions de tube, en position dépliée, afin d'éviter que le vélo ne se replie lors de son utilisation et ne blesse l'utilisateur.

Document US4462606A montre le préambule de la revendication 1.

Il est connu du document DE202009004945 un dispositif permettant de maintenir en position dépliée deux portions de tube montées pivotantes l'une par rapport à l'autre. Ce dispositif comprend un levier et une tige disposés entre les deux portions de tube.

Afin de déplier les deux portions de tube, l'utilisateur doit d'abord les faire pivoter l'une par rapport à l'autre de manière à les disposer dans la continuité l'une de l'autre. Il doit ensuite appuyer manuellement sur le levier afin de le plaquer contre l'ensemble tubulaire, de manière à bloquer les deux portions de tube l'une par rapport à l'autre.

Un inconvénient de ce dispositif est que l'effort à exercer pour plaquer le levier contre l'ensemble tubulaire peut être important, de sorte que l'utilisateur peut rencontrer des difficultés à bloquer efficacement la connexion entre les deux portions de tube.

En outre, ce type de charnière étant généralement disposée à proximité des roues, le levier peut être couvert de boue. Aussi, l'actionnement du levier peut se révéler salissant pour les mains de l'utilisateur.

Par ailleurs, si l'utilisateur oublie de plaquer le levier contre l'ensemble tubulaire ou ne le plaque pas correctement, la charnière risque de se plier lors de l'utilisation du vélo, ce qui peut s'avérer très dangereux et peut provoquer de lourdes chutes.

### Exposé de l'invention

Un but de la présente invention est de proposer une charnière remédiant aux problèmes précités.

Pour ce faire, l'invention porte sur une charnière pour un vélo pliant comprenant :
- une première portion de tube ;
- une seconde portion de tube montée pivotante par rapport à la première portion de tube autour d'un premier axe de pivotement, la seconde portion de tube comprenant une portion de verrouillage, les première et seconde portions de tube pouvant prendre une position dépliée dans laquelle elles s'étendent dans la continuité l'une de l'autre et une position pliée dans laquelle elles forment un angle aigu entre elles;
- un élément de blocage ayant une première portion d'extrémité et une seconde portion d'extrémité, la première portion d'extrémité étant montée pivotante à la première portion de tube autour d'un deuxième axe de pivotement, l'élément de blocage pouvant prendre au moins une position fermée dans laquelle il maintient la première portion de tube et la seconde portion de tube en position dépliée et une position ouverte dans laquelle il permet le déplacement en position pliée des première et seconde portions de tube par pivotement de la seconde portion de tube par rapport à la première portion de tube autour du premier axe de pivotement ;
- une pièce de connexion ayant une première partie d'extrémité montée pivotante à la seconde portion d'extrémité de l'élément de blocage autour d'un troisième axe de pivotement, la pièce de connexion ayant en outre une seconde partie d'extrémité montée pivotante à la seconde portion de tube autour d'un quatrième axe de pivotement ; et
- un dispositif de rappel configuré pour amener l'élément de blocage de sa position ouverte vers sa position fermée.

De manière non limitative, les première et seconde portions de tube peuvent être des portions de la potence, du guidon, du cadre ou encore de la tige de selle du vélo pliant. Elles présentent de préférence chacune une première extrémité. Le premier axe de pivotement est de préférence disposé aux premières extrémités des première et seconde portions de tube. Le deuxième axe de pivotement est de préférence disposé à la première extrémité de la première portion de tube.

L'élément de blocage forme avantageusement un levier présentant de préférence la forme d'un parallélépipède et peut comprendre un logement intérieur. Dans la position ouverte, il est de préférence incliné par rapport à la seconde portion de tube.

Dans la position pliée, les première et seconde portions de tube forment de préférence un angle strictement supérieur à 0° et de préférence inférieur ou égal à 180°. En position pliée, lesdites portions de tube ne sont pas alignées et ne s'étendent pas dans la continuité l'une de l'autre. L'élément de blocage est préférentiellement en position ouverte lorsque les portions de tube sont en position pliée.

Afin de placer lesdites première et seconde portions de tube en position dépliée, il convient de faire pivoter la seconde portion de tube par rapport à la première portion de tube autour du premier axe de pivotement, dans un premier sens de rotation, dans le but de placer lesdites deux portions de tube dans la continuité l'une de l'autre, de préférence alignées. La pièce de connexion exerce dans un premier temps un effort sur la seconde extrémité de l'élément de blocage. Ceci entraine un pivotement dudit élément de blocage dans un premier sens de pivotement, autour du deuxième axe de pivotement, qui tend à l'éloigner de la seconde portion de tube.

Dans un deuxième temps, lorsque le quatrième axe de pivotement franchit un plan passant par le premier axe de pivotement et le troisième axe de pivotement, la pièce de connexion entraine l'élément de blocage en rotation dans un second sens de pivotement, opposé au premier sens de pivotement, autour du deuxième axe de pivotement. Ceci tend à le rapprocher de la seconde portion de tube. Le dispositif de rappel tend à faire pivoter l'élément de blocage dans le second sens de pivotement en exerçant un effort de rappel sur ledit élément de blocage. Toutefois, la pièce de connexion empêche le pivotement de l'élément de blocage dans ledit second sens de pivotement. L'élément de blocage reste donc en position ouverte et autorise le pivotement de la seconde portion de tube par rapport à la première portion de tube.

En poursuivant le pivotement de la seconde portion de tube par rapport à la première portion de tube, lesdites première et seconde portions de tube sont amenées en position dépliée, dans laquelle elles s'étendent dans la continuité l'une de l'autre. Lorsque les première et seconde portions de tube s'étendent dans la continuité l'une de l'autre elles sont de préférence mises bout-à-bout et encore de préférence alignées. Les axes des première et seconde portions de tube sont alors de préférence coïncidant ou encore confondus. En variante, ils peuvent être légèrement inclinés ou déportés l'un par rapport à l'autre. De préférence, les premières extrémités des première et seconde portions de tube sont en contact lorsque lesdites portions de tube sont en position dépliée.

Dès lors, la pièce de connexion n'empêche plus le pivotement de l'élément de blocage dans le second sens de pivotement. Grâce à l'invention, le dispositif de rappel, qui est contraint, entraine en rotation l'élément de blocage autour du deuxième axe de pivotement, dans le second sens de pivotement. L'effort de rappel exercé par le dispositif de rappel sur l'élément de blocage est suffisant pour faire pivoter l'élément de blocage de manière à le rapprocher encore de la seconde portion de tube jusqu'en une position fermée dans laquelle il est de préférence plaqué contre ladite seconde portion de tube. Le dispositif de rappel permet le passage de l'élément de blocage de sa position ouverte à sa position fermée, malgré une éventuelle résistance imposée par la pièce de connexion et les éventuels frottements. Ce passage de la position fermée à la position ouverte est également appelé « passage du point dur ».

Grâce à l'invention, l'utilisateur n'est pas tenu d'amener manuellement l'élément de blocage en position fermée.

Dans la position fermée, l'élément de blocage est proche de la seconde portion de tube et de préférence plaqué contre ladite seconde portion de tube. Il s'étend préférentiellement sensiblement parallèlement à ladite seconde portion de tube. Dans cette position fermée, l'élément de blocage exerce un effort sur la pièce de connexion qui transmet cet effort à la seconde portion de tube. Cet effort est dirigé sensiblement vers la première portion de tube de sorte qu'il tend à maintenir la première portion de tube et la seconde portion de tube en position dépliée. L'élément de blocage maintient donc efficacement les première et seconde portions de tube en position dépliée, même en présence d'une force tendant à faire pivoter la seconde portion de tube par rapport à la première portion de tube.

La charnière selon l'invention facilite grandement le blocage des première et seconde portions de tube en position dépliée, notamment grâce au dispositif de rappel qui permet de placer automatiquement l'élément de blocage en position fermée. L'invention permet donc de s'affranchir de l'étape particulièrement contraignante de mise en position fermée manuelle de l'élément de blocage contre la seconde portion de tube, rencontrée avec les dispositifs de l'art antérieur. L'utilisateur n'a pas besoin d'appuyer fortement sur l'élément de blocage et peut déplier les première et seconde portions de tube et les bloquer dans cette position dépliée en une seule action exercée sur la seconde portion de tube.

L'invention permet donc de déployer plus rapidement le vélo et permet donc une utilisation plus rapide dudit vélo.

La charnière selon l'invention permet par ailleurs de s'affranchir des problèmes de fermeture de l'élément de blocage rencontrés avec les dispositifs antérieurs, et notamment le risque que l'utilisateur oublie de fermer l'élément de blocage ou ne le ferme pas correctement. La charnière selon l'invention assure par conséquent un blocage des première et seconde portions de tube en position dépliée, garantissant ainsi la sécurité de l'utilisateur.

En outre, l'utilisateur n'a pas besoin de toucher l'élément de blocage, de sorte qu'il ne se salit pas les mains.

Pour placer l'élément de blocage en position ouverte, il convient de le faire pivoter dans le premier sens de pivotement autour du deuxième axe de pivotement, de manière à l'éloigner de la seconde portion de tube. Lorsque l'élément de blocage est placé en position ouverte, la seconde portion de tube peut être pivotée par rapport à la première portion de tube dans un second sens de rotation, opposé au premier sens de rotation, afin de placer les première et seconde portions de tube en position pliée.

Avantageusement, le premier axe de pivotement et le deuxième axe de pivotement sont parallèles et s'étendent de part et d'autre d'un diamètre de la première portion de tube. Aussi, pour déplier les première et seconde portions de tube, la seconde portion de tube est pivotée dans le premier sens de rotation, en direction du deuxième axe de pivotement et de l'élément de blocage. En outre, le quatrième axe de pivotement est rapproché du deuxième axe de pivotement. Par ailleurs, l'élément de blocage est pivoté entre la position ouverte et la position fermée dans le second sens de pivotement, en direction de la seconde portion de tube et en direction du premier axe de pivotement.

Préférentiellement, le premier axe de pivotement et le quatrième axe de pivotement s'étendent de part et d'autre d'un diamètre de la seconde portion de tube. Aussi, les deuxième, troisième et quatrième axe s'étendent avantageusement d'un même côté des première et seconde portions de tube. En outre, lorsque les première et seconde portions de tube sont en position dépliée et lorsque l'élément de blocage est en position fermée, les deuxième et quatrième axes de pivotement sont disposés à proximités l'un de l'autre.

De manière non limitative, la seconde portion de tube peut comprendre une portion de montage faisant saillie depuis une surface extérieure de ladite seconde portion de tube et étant traversée par le quatrième axe de pivotement. Aussi, la pièce de connexion est montée pivotante sur ladite portion de montage. Lorsque l'élément de blocage est en position fermée, ladite portion de montage s'étend de préférence dans un logement ménagé dans l'élément de blocage.

De manière avantageuse, l'élément de blocage est sensiblement parallèle à la pièce de connexion lorsque les première et seconde portions de tube sont en position dépliée. En outre, considérés en projection dans un plan passant par les deuxième et quatrième axes de pivotement, le quatrième axe de pivotement est disposé entre lesdits deuxième et troisième axes de pivotement. Dans la position fermée, l'élément de blocage exerce donc un effort sur la pièce de connexion, qu'elle transmet à la seconde portion de tube, qui est dirigé vers le deuxième axe de pivotement. La pièce de connexion s'oppose au pivotement de la seconde portion de tube vers une position dépliée.

Encore de préférence, la pièce de connexion s'étend dans le logement ménagé dans l'élément de blocage lorsque ce dernier est en position fermée.

De préférence, les premier, deuxième, troisième et quatrième axes de pivotement sont sensiblement parallèles entre eux.

Avantageusement, lorsque l'élément de blocage est en position fermée, le premier axe de pivotement et le troisième axe de pivotement s'étendent d'un même côté d'un plan passant par le deuxième axe de pivotement et le quatrième axe de pivotement. Dans cette position, l'élément de blocage est de préférence plaqué contre la seconde portion de tube.

Au contraire, lorsque l'élément de blocage est en position ouverte, les premier et troisième axes de pivotement s'étendent préférentiellement de part et d'autre dudit plan passant par les deuxième et quatrième axes de pivotement. La position intermédiaire de l'élément de blocage dans laquelle les deuxième, troisième et quatrième axes de pivotement sont alignés est appelée position de point dur.

L'effort exercé par le dispositif de rappel permet de faire passer l'élément de blocage de la position ouverte à la position fermée et donc de faire passer le troisième axe de pivotement d'un premier côté du plan passant par les deuxième et quatrième axes de pivotement à un second côté dudit plan.

Lorsque les première et seconde portions de tube sont en position dépliée et lorsque l'élément de blocage est en position fermée, un effort exercé sur la seconde portion de tube visant à la faire pivoter dans le second sens de rotation, pour la plier, induit un effort sur la pièce de connexion, transmis à l'élément de blocage, de préférence dirigé légèrement vers la seconde portion de tube. Cet effort tend à faire pivoter davantage l'élément de blocage dans le second sens de pivotement et donc à le rapprocher de la seconde portion de tube, ce qui permet de maintenir les première et seconde portions de tube en position dépliée. L'élément de blocage maintient donc efficacement les portions de tube en position dépliée, même lorsqu'un effort est exercé sur les portions de tube. Ceci empêche un pliage involontaire des portions de tube et garantit la sécurité de l'utilisateur.

De manière avantageuse, le dispositif de rappel comprend un ressort de torsion s'étendant autour du deuxième axe de pivotement et coopérant avec la première portion de tube et l'élément de blocage. Le ressort de torsion est choisi de manière à pouvoir fournir un effort suffisant pour amener l'élément de blocage de la position ouverte à la position fermée. Lorsque l'élément de blocage est en position ouverte, le ressort de torsion est contraint et tend à faire pivoter l'élément de blocage vers la seconde portion de tube, de manière à passer le « point dur » et à plaquer l'élément de blocage contre la seconde portion de tube, une fois les première et seconde portions de tube placées en position dépliée.

Le ressort de torsion prend avantageusement appui sur une surface extérieure de la première portion de tube.

De préférence, le ressort de torsion prend également appui sur une surface externe de l'élément de blocage ou sur une surface interne d'une portion d'appui de l'élément de blocage.

Préférentiellement, la pièce de connexion est une tige s'étendant entre l'élément de blocage et la seconde portion de tube. Cette tige permet de guider la rotation de l'élément de blocage lors du pivotement de la seconde portion de tube par rapport à la première portion de tube.

Avantageusement, la pièce de connexion présente une longueur réglable, grâce à quoi l'utilisateur peut ajuster la longueur de la pièce de connexion afin de réduire un jeu pouvant apparaitre entre la pièce de connexion, la seconde portion de tube et l'élément de blocage. Le réglage de la longueur de la pièce de connexion permet également d'ajuster l'effort nécessaire pour faire passer l'élément de blocage de la position ouverte à la position fermée et inversement, et donc pour passer le point dur.

D'après l'invention, la charnière comprend en outre un dispositif de verrouillage présentant une position de verrouillage dans laquelle il maintient l'élément de blocage en position fermée et une position déverrouillée dans laquelle il permet la mise en position ouverte de l'élément de blocage. Lorsque le dispositif de verrouillage est placé dans la position verrouillée, il s'oppose au pivotement de l'élément de blocage, autour du deuxième axe de pivotement, dans le second sens de pivotement tendant à l'éloigner de la seconde portion de tube. Un intérêt est d'empêcher l'ouverture involontaire de l'élément de blocage, risquant d'entrainer un pliage des première et seconde portions de tube. Le dispositif de verrouillage améliore la sécurité de l'utilisateur.

Dans la position verrouillée, le dispositif de verrouillage maintien de préférence l'élément de blocage plaqué contre la seconde portion de tube ou à proximité de ladite seconde portion de tube.

D'après l'invention, la seconde portion de tube comprend une portion de verrouillage et le dispositif de verrouillage est monté sur l'élément de blocage et comprend un organe d'engagement configuré pour coopérer avec la portion de verrouillage lorsque le dispositif de verrouillage est placé en position de verrouillage.

La portion de verrouillage fait de préférence saillie depuis la seconde portion de tube. De manière non limitative, l'organe d'engagement peut être configuré pour coopérer avec un orifice ménagé dans la portion de verrouillage. En variante, la portion de verrouillage peut présenter la forme d'un crochet.

Toujours de manière non limitative, l'organe d'engagement peut présenter la forme d'un pion ou d'un crochet configuré pour s'engager avec la portion de verrouillage lorsque le dispositif de verrouillage est en position de verrouillage.

Préférentiellement, le dispositif de verrouillage comprend une portion d'actionnement configurée pour placer le dispositif de verrouillage en position déverrouillée lorsqu'elle est actionnée.

De manière avantageuse, le dispositif de verrouillage comprend un organe de rappel configuré pour maintenir le dispositif de verrouillage en position de verrouillage, lorsque la portion d'actionnement n'est pas actionnée. Un intérêt est de permettre à l'utilisateur de placer facilement le dispositif de verrouillage en position déverrouillée tout en réduisant le risque qu'il soit placé en position déverrouillée de manière involontaire. La portion d'actionnement est de préférence disposée sur une paroi latérale de l'élément de blocage. L'organe de rappel peut consister en un élément de ressort ou en une lame ressort.

De manière non limitative, le dispositif de verrouillage peut être monté pivotant ou coulissant entre la position de verrouillage et la déverrouillée.

L'invention porte par ailleurs sur une tige de selle de vélo comportant la charnière selon l'invention.

L'invention porte également sur un cadre de vélo comportant au moins une charnière selon l'invention.

De plus, l'invention porte sur un guidon de vélo comportant au moins une charnière selon l'invention.

### Brève description des dessins

L'invention sera mieux comprise à la lecture de la description qui suit d'un mode de réalisation de l'invention donné à titre d'exemple non limitatif, en référence aux dessins annexés, sur lesquels :
[Fig. 1]la figure **1** illustre une charnière pour vélo pliant selon l'invention, en position pliée;
[Fig. 2]la figure **2** illustre la charnière de la figure **1** en position dépliée;
[Fig. 3]la figure **3** est une vue en éclatée de la charnière de la figure **1** ;
[Fig. 4]la figure **4** illustre l'élément de blocage et la pièce de connexion de la charnière de la figure **1****,** lorsque l'élément de blocage est en position ouverte;
[Fig. 5]la figure **5** illustre la charnière de la figure **1** en position dépliée, en vue de côté;
[Fig. 6]la figure **6** illustre la charnière de la figure **5****,** dans laquelle la seconde portion de tube a été pivotée légèrement ;
[Fig. 7]la figure **7** illustre la charnière de la figure **5****,** dans laquelle les première et seconde portions de tubes sont en position dépliée et l'élément de blocage est en position ouverte;
[Fig. 8]la figure **8** illustre la charnière de la figure **5****,** dans laquelle l'élément de blocage est en position de « point dur »;
[Fig. 9]la figure **9** illustre la charnière de la figure **5****,** dans laquelle l'élément de blocage est en position fermée ; et
[Fig. 10]la figure **10** illustre l'élément de blocage et la pièce de connexion de la charnière de la figure **5****,** lorsque l'élément de blocage est en position fermée.

### Description des modes de réalisation

L'invention porte sur une charnière pour vélo pliant.

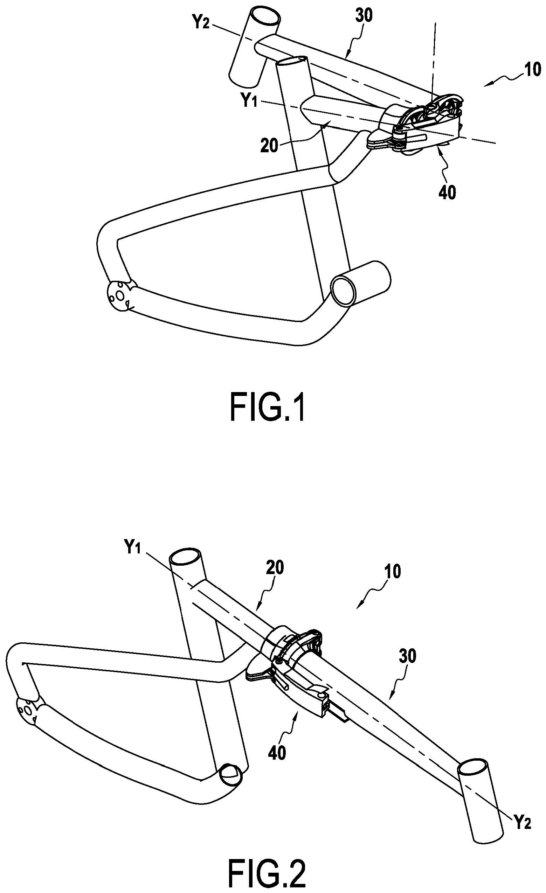

Un exemple de charnière **10** selon l'invention, permettant de placer en position pliée ou en position dépliée deux portions de tube, est donné en figures **1** et **2****.**

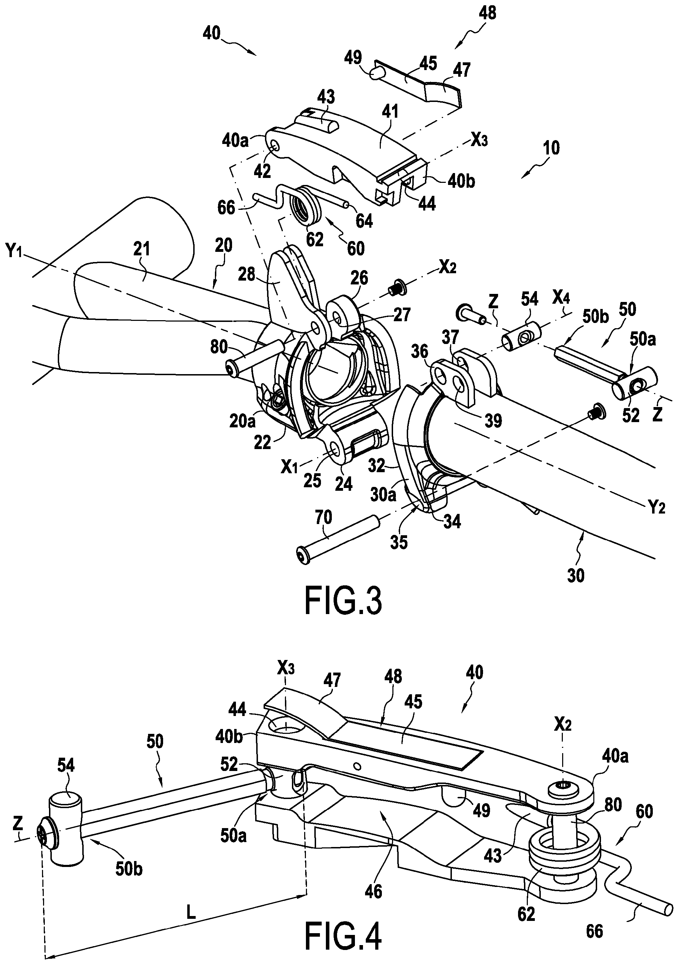

En se référant à la figure **3****,** on constate que la charnière **10** comprend une première portion de tube **20,** une seconde portion de tube **30,** un élément de blocage **40,** une pièce de connexion **50** et un dispositif de rappel **60** configuré pour amener l'élément de blocage **40** depuis une position ouverte vers une position fermée.

Dans cet exemple non limitatif, la première portion de tube **20** et la seconde portion de tube **30** sont des portions de tube du cadre d'un vélo. Sans sortir du cadre de l'invention, ces première et seconde portions de tube **20,30** peuvent être des portions de tube de la tige de selle, de la potence ou encore du guidon d'un vélo. La première portion de tube **20** est cylindrique et s'étend selon une première direction longitudinale **Y₁**. La seconde portion de tube **30** est également cylindrique et s'étend selon une seconde direction longitudinale **Y₂**.

La première portion de tube **20** comprend une surface extérieure **21.** Elle comprend de plus une première extrémité **20a** munie d'un premier manchon **22.** La première portion de tube **20** comprend en outre une première portion de montage **24** faisant saillie depuis le manchon **22** et traversée par une première ouverture **25** s'étendant selon un premier axe de pivotement **X₁**. La première portion de tube **20** comporte de plus une deuxième portion de montage **26** faisant saillie depuis le premier manchon **22** et diamétralement opposée par rapport à la première portion de montage **24.** Ladite deuxième portion de montage **26** est traversée par une seconde ouverture **27** s'étendant selon un deuxième axe de pivotement **X₂**.

La première portion de tube **20** comprend par ailleurs une paire d'ailettes **28** faisant saillie depuis le premier manchon **22,** transversalement à la première direction longitudinale **Y₁** de la première portion de tube **22.** Lesdites ailettes **28** sont disposées à proximité de la deuxième portion de montage **26** et diamétralement opposées par rapport à la première portion de montage **24.**

Par ailleurs, la seconde portion de tube **30** comprend une première extrémité **30a** munie d'un second manchon **32.** La seconde portion de tube **30** comprend une troisième portion de montage **34,** faisant saillie depuis le second manchon **32** et traversée par une troisième ouverture **35** s'étendant parallèlement à la première ouverture **25.**

La charnière **10** selon l'invention comprend une première goupille **70** configurée pour s'étendre dans la première ouverture **25** ménagée dans la première portion de montage **24** de la première portion de tube **20** et dans la troisième ouverture **35** ménagée dans la troisième portion de montage **34** de la seconde portion de tube **30.** Aussi, la troisième portion de montage **34** coopère avec la première portion de montage **24** de la première portion de tube **20** de sorte que la seconde portion de tube **30** est montée pivotante par rapport à la première portion de tube **20** autour du premier axe de pivotement **X₁**.

La seconde portion de tube **30** comprend par ailleurs une quatrième portion de montage **36** traversée par une quatrième ouverture **37.** La portion de montage **36,** qui forme également une portion de verrouillage, est en outre traversée par une cinquième ouverture **39.**

En se référant à la figure **4****,** on constate que l'élément de blocage **40** présente sensiblement la forme d'un parallélépipède rectangle. Il forme un levier et comporte une surface externe **41** ainsi qu'un fourreau **43** faisant saillie depuis ladite surface externe **41** sensiblement parallèlement à ladite surface externe **41.**

Comme on peut le voir sur la figure **4****,** l'élément de blocage **40** présente une première portion d'extrémité **40a** et une seconde portion d'extrémité **40b,** opposée à la première portion d'extrémité **40a.** La première portion d'extrémité **40a** de l'élément de blocage **40** est traversée par un premier orifice **42** et la seconde portion d'extrémité **40b** de l'élément de blocage **40** est traversée par un second orifice **44,** s'étendant sensiblement parallèlement au premier orifice **42,** selon un troisième axe de pivotement **X₃**. Un logement **46** est ménagé dans l'élément de blocage **40.**

La charnière **10** selon l'invention comprend une seconde goupille **80** configurée pour s'étendre dans la deuxième ouverture **27** ménagée dans la deuxième portion de montage **26** de la première portion de tube **20** et dans le premier orifice **42** de la première portion d'extrémité de l'élément de blocage **40.** Aussi, la première portion d'extrémité **40a** de l'élément de blocage **40** coopère avec la deuxième portion de montage **26** de la première portion de tube **20** de sorte que la première portion d'extrémité **40a** de l'élément de blocage **40** est montée pivotante par rapport à la première portion de tube **20** autour du deuxième axe de pivotement **X₂**.

La pièce de connexion **50** présente la forme d'une tige ayant une longueur **L** et s'étendant selon un axe de tige **Z.** La longueur **L** de la pièce de connexion est de préférence réglable. Ladite pièce de connexion **50** présente une première partie d'extrémité **50a** et une seconde partie d'extrémité **50b** opposée à la première partie d'extrémité **50a.** La première partie d'extrémité **50a** de la pièce de connexion est munie d'un premier cylindre de connexion **52** s'étendant selon une direction transversale à l'axe de tige **Z.** La seconde extrémité **50b** de la pièce de connexion est munie d'un second cylindre de connexion **54** s'étendant selon une direction transversale à l'axe de tige **Z,** sensiblement parallèlement au premier cylindre de connexion **52.**

Le premier cylindre de connexion **52** s'étend dans le second orifice **44** traversant la seconde portion d'extrémité **40b** de l'élément de blocage **40.** Aussi, la première partie d'extrémité **50a** de la pièce de connexion **50** est montée pivotante à la seconde portion d'extrémité **40b** de l'élément de blocage **40,** autour du troisième axe de pivotement **X₃**.

Le second cylindre de connexion **54** s'étend dans la troisième ouverture **37** de la troisième portion de montage **36** de la seconde portion de tube **30.** Aussi, la seconde partie d'extrémité **50b** de la pièce de connexion **50** est montée pivotante à la seconde portion de tube **30** autour du quatrième axe de pivotement **X₄**.

Les premier **X₁**, deuxième **X₂**, troisième **X₃** et quatrième **X₄** axes de pivotement sont sensiblement parallèles entre eux. Le premier axe de pivotement **X₁** et le deuxième axe **X₂** de pivotement sont diamétralement opposés et s'étendent de part et d'autre de la première portion de tube **20.** De même, le troisième axe de pivotement **X₃** et le premier axe de pivotement **X₁** sont diamétralement opposés et s'étendent de part et d'autre de la seconde portion de tube **30.**

En outre, la pièce de connexion **50** s'étend entre la seconde portion d'extrémité **40b** de l'élément de blocage **40** et la première extrémité **30a** de la seconde portion de tube **30.** L'élément de blocage **40** s'étend entre la première partie d'extrémité **50a** de la pièce de connexion **50** et la première extrémité **20a** de la première portion de tube **20.**

Le dispositif de rappel **60** est constitué d'un ressort de torsion, ou ressort hélicoïdal, comprenant une pluralité de spires **62,** une première extrémité d'appui **64** et une seconde extrémité d'appui **66.** Les spires **62** s'étendent autour de la première goupille **80** et donc autour du deuxième axe de pivotement **X₂**. En outre, lesdites spires **62** s'étendent entre les ailettes **28** de la première portion de tube **20.** La première extrémité d'appui **64** est configurée pour s'étendre dans le fourreau **43.** De manière non limitative, la seconde extrémité d'appui **66** est configurée pour prendre appui sur la surface extérieure **21** de la première portion de tube **20.**

Selon l'invention, lorsqu'il est contraint, ledit dispositif de rappel **60** tend à faire pivoter l'élément de blocage **40** autour du deuxième axe de pivotement **X₂**, vers la seconde portion de tube **30.**

Sans sortir du cadre de l'invention, la première extrémité d'appui **64** du dispositif de rappel **60** peut prendre appui directement sur la surface externe **41** de l'élément de blocage **40.** En variante, l'élément de blocage **40** pourrait comprendre une portion d'appui configurée de sorte que ladite portion d'appui et l'élément de blocage s'étendent de part et d'autre du deuxième axe de pivotement **X₂**. Dans cette configuration, la première extrémité d'appui **64** du dispositif de rappel **60** peut prendre appui sur la surface interne de ladite portion d'appui, afin de faire pivoter l'élément de blocage vers la seconde portion de tube.

Par ailleurs, de manière non limitative, la charnière **10** comprend un dispositif de verrouillage **48** configuré pour être monté pivotant sur l'élément de blocage **40.** Le dispositif de verrouillage **48** comprend un organe de rappel **45,** formés par une lame ressort coopérant avec une face latérale de l'élément de blocage **40.** Le dispositif de verrouillage comprend également un organe d'engagement **49** configuré pour s'étendre dans le logement **46** de l'élément de blocage **40.** Le dispositif de verrouillage **48** comprend en outre une portion d'actionnement **47** configurée pour faire pivoter l'organe de rappel et déplacer l'organe d'engagement **49** vers l'extérieur de l'organe de blocage, lorsqu'elle est actionnée.

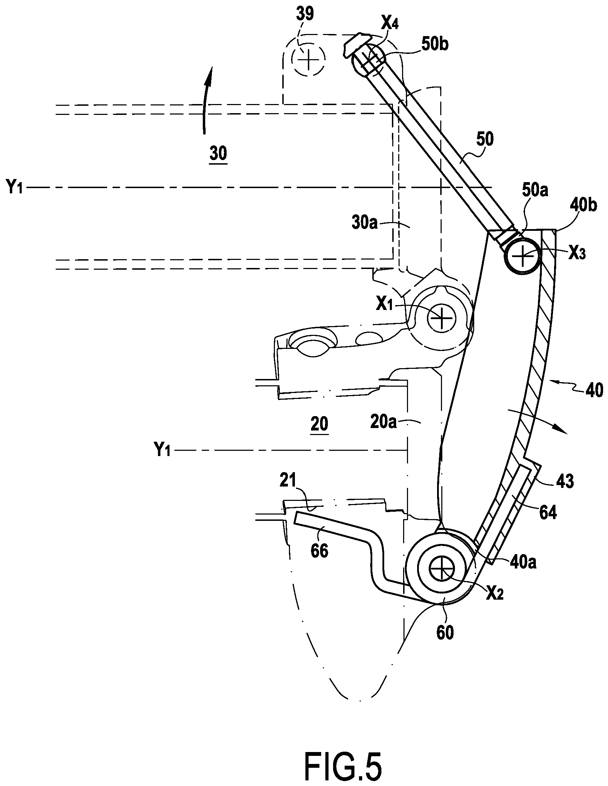

La mise en position dépliée de la charnière **10** est illustrée sur les figures **5** à **9****.** Sur la figure **5****,** les première et seconde portions de tube **20,30** ne s'étendent pas dans la continuité l'une de l'autre et sont donc en position pliée. Elles forment un angle aigu entre elles et ne sont pas alignées. Cette position pliée correspondant à une position de rangement du vélo permettant de réduire l'encombrement dudit vélo afin de le ranger ou de le transporter. Dans cet exemple non limitatif, en position pliée, les première et seconde directions longitudinales **Y₁, Y₂** des première et seconde portions de tube **20,30** sont sensiblement parallèles et non confondues. Les deux portions de tube ne s'étendent pas dans la continuité l'une de l'autre. En outre, dans ladite position pliée, lesdites première et seconde directions longitudinales **Y₁, Y₂** forment un angle aigu l'une par rapport à l'autre.

En outre, dans cette position pliée, le dispositif de rappel **60** est légèrement contraint. L'élément de blocage **40** est dans une position ouverte, de sorte qu'il autorise le pivotement de la seconde portion de tube **30** par rapport à la première portion de tube **20** autour du premier axe de pivotement **X₁**.

Pour placer les première et seconde portions de tube **20,30** en position dépliée, il convient de faire pivoter la seconde portion de tube **30** par rapport à la première portion de tube **20,** autour du premier axe de pivotement **X₁**, dans un premier sens de rotation indiqué par une large flèche sur la figure **5****.** Ce pivotement tend à aligner lesdites première et seconde portions de tube **20,30.** Pour réaliser ce pivotement l'utilisateur peut saisir la seconde portion de tube d'une seule main et la faire pivoter.

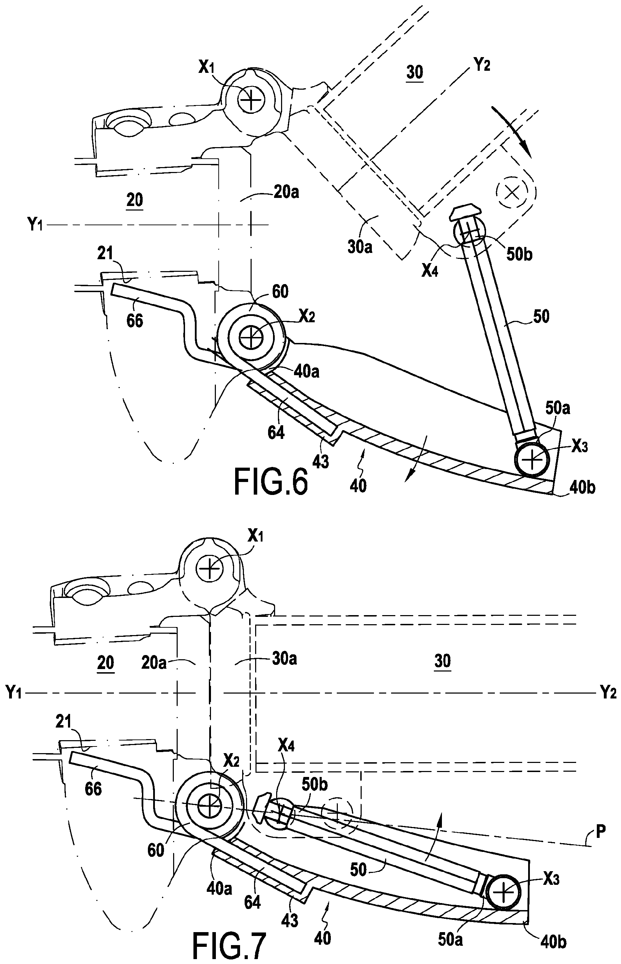

Dans un premier temps, ce pivotement illustré par le passage de la figure **5** à la figure **6****,** entraine un déplacement de la pièce de connexion **50** qui exerce alors un effort sur la seconde extrémité **40b** de l'élément de blocage **40.** Ceci entraine un pivotement dudit élément de blocage **40** dans un premier sens de pivotement indiqué par la petite flèche sur la figure **6****,** autour du deuxième axe de pivotement **X₂**, qui tend à l'éloigner de la seconde portion de tube **30.** La distance séparant le premier axe de pivotement **X₁** et le troisième axe de pivotement **X₃** augmente avec le pivotement de l'élément de blocage **40.**

Dans la mesure où le dispositif de rappel **60** est légèrement contraint, il exerce un léger effort de rappel sur l'élément de blocage **40,** tendant à le faire pivoter autour du deuxième axe de pivotement **X₂** dans un second sens de pivotement, opposé au premier sens de pivotement indiqué par la petite flèche. Cet effort de rappel exercé par le dispositif de rappel **60** sur l'élément de blocage **40** est toutefois suffisamment faible pour permettre à l'utilisateur de faire pivoter la seconde portion de tube **30** dans le premier sens de rotation et l'élément de blocage **40** dans le premier sens de pivotement, sans difficulté.

Le pivotement de l'élément de blocage **40** dans ce premier sens de pivotement tend par ailleurs à faire pivoter la première extrémité d'appui **64** du dispositif de rappel **60** dans le premier sens de pivotement, comme illustré par le passage de la figure **5** à la figure **6****,** tandis que la deuxième extrémité d'appui **66** du dispositif de rappel reste en appui contre la surface extérieure **21** de la première portion de tube **20.** Ceci a pour conséquence de contraindre davantage le dispositif de rappel **60.**

Comme on le constate sur la figure **6****,** le deuxième axe de pivotement **X₂** et le troisième axe de pivotement **X₃** s'étendent d'un même côté d'un plan passant par le premier axe de pivotement **X₁** et par le quatrième axe de pivotement **X₄**.

Dans un deuxième temps, l'utilisateur fait davantage pivoter la seconde portion de tube **30** par rapport à la première portion de tube **20** dans le premier sens de rotation indiqué par la large flèche en figure **6****.** Lorsque le troisième axe de pivotement **X₃** franchit ledit plan passant par le premier axe de pivotement **X₁** et le quatrième axe de pivotement **X₄**, la seconde partie d'extrémité **50b** de la pièce de connexion **50,** et donc le quatrième axe de pivotement **X₄**, est rapprochée de la première portion d'extrémité **40a** de l'élément de blocage **40,** et donc du deuxième axe de pivotement **X₂**.

La pièce de connexion **50** entraine alors l'élément de blocage **40** en rotation dans le second sens de pivotement, opposé au premier sens de pivotement, autour du deuxième axe de pivotement **X₂**, de sorte que la distance entre le premier axe de pivotement **X₁** et le troisième axe de pivotement **X₃** décroit. Ceci tend à rapprocher l'élément de blocage **40** de la seconde portion de tube **30.**

Le dispositif de rappel **60** tend toujours à faire pivoter l'élément de blocage **40** dans le second sens de pivotement en exerçant un effort de rappel sur ledit élément de blocage **40.**

En poursuivant le pivotement de la seconde portion de tube **30** par rapport à la première portion de tube **20,** autour du premier axe de pivotement **X₁**, dans le premier sens de rotation, lesdites première et seconde portions de tube **20,30** sont amenées en position dépliée. Dans cette position dépliée, elles s'étendent dans la continuité l'une de l'autre, alignées, comme illustré en figure **7****.** La première direction longitudinale **Y₁** de la première portion de tube **20** est sensiblement confondue avec la seconde direction longitudinale **Y₂** de la seconde portion de tube **30.** Les premières extrémités **20a,30a** des première et seconde portions de tube sont en contact l'une de l'autre.

Sur la figure **7****,** l'élément de blocage **40** est toujours en position ouverte de sorte qu'il autorise toujours le pivotement de la seconde portion de tube **30** par rapport à la première portion de tube **20.** L'élément de blocage **40** est incliné par rapport à la seconde direction longitudinale **Y₂** de la seconde portion de tube **30.** En outre, le premier axe de pivotement **X₁** et le troisième axe de pivotement **X₃** s'étendent de part et d'autre d'un plan **P** passant par le deuxième axe de pivotement **X₂** et par le quatrième axe de pivotement **X₄**.

Lorsque les première et seconde portions de tube sont en position dépliée et l'élément de blocage est en position ouverte, la pièce de connexion **50** n'empêche plus le pivotement de l'élément de blocage **40** dans le second sens de pivotement. Aussi, le dispositif de rappel **60,** qui est contraint, entraine en rotation l'élément de blocage **40** autour du deuxième axe de pivotement **X₂**, dans ledit second sens de pivotement indiqué par la petite flèche en figure **7****,** vers la seconde portion de tube **30.** La distance entre le deuxième axe de pivotement **X₂** et le quatrième axe de pivotement **X₄** reste constante et la pièce de connexion **50** est entrainée en rotation par l'élément de blocage **40** autour du quatrième axe de pivotement **X₄**.

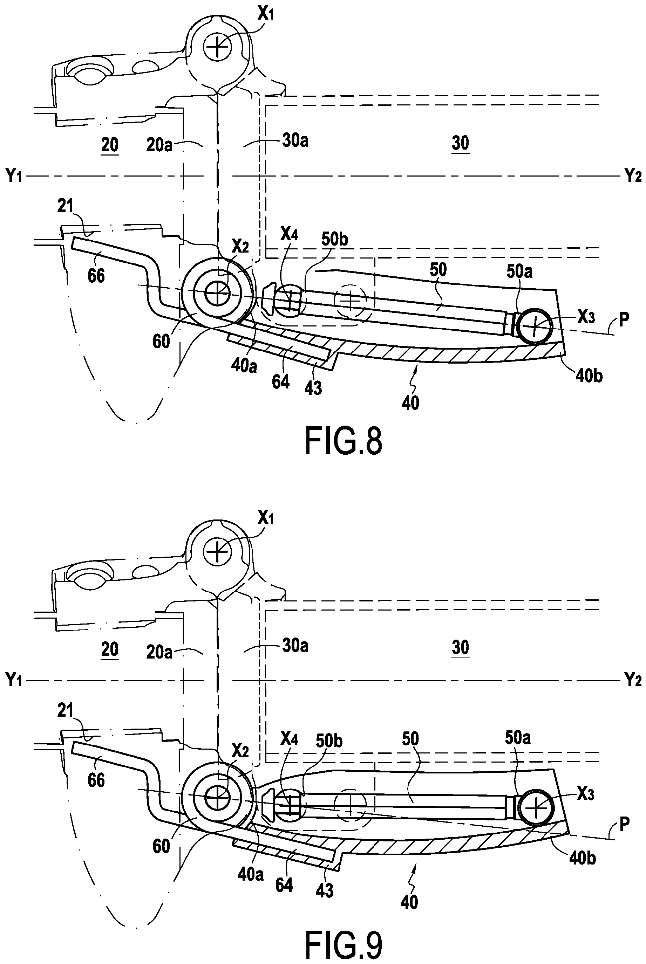

Lorsque les deuxième, troisième et quatrième axes de pivotements **X₂, X₃, X₄** sont amenés en position alignée, comme illustré en figure **8****,** la pièce de connexion **50** exerce un effort résistant s'opposant légèrement au pivotement de l'élément de blocage **40** dans le second sens de pivotement, vers sa position fermée. Cette position est appelée « point dur ». L'effort résistant exercé par la pièce de connexion est toutefois inférieur à l'effort exercé par le dispositif de rappel **60** sur l'élément de blocage **40,** de sorte que grâce à l'invention, le dispositif de rappel **60** permet à l'élément de blocage **40** de passer ce « point dur ». Le troisième axe de pivotement **X₃** passe alors de l'autre côté du plan **P.**

Le dispositif de rappel **60** permet donc d'amener l'élément de blocage **40** de sa position ouverte à sa position fermée, comme illustrée en figure **9****.** Ce passage de la position ouverte à la position fermée se fait automatiquement et sans intervention de l'utilisateur.

En position fermée, l'élément de blocage **40** est plaqué contre la seconde portion de tube **30** ou contre la quatrième portion de montage **36** de la seconde portion de tube **30,** et s'étend sensiblement parallèlement à la seconde direction longitudinale **Y₂** de la seconde portion de tube **30.** Les premier et troisième axes de pivotement **X₁**, **X₃** s'étendent d'un même côté du plan **P** passant par les deuxième et quatrième axes de pivotement **X₂**, **X₄**.

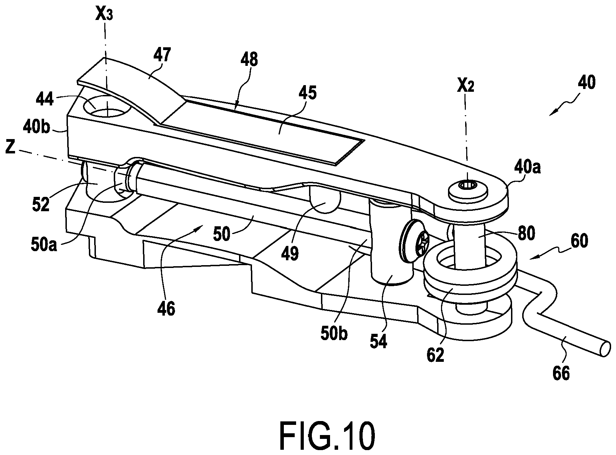

En se référant à la figure **10****,** on constate que dans cette position fermée, la pièce de connexion **50** s'étend dans le logement **46** ménagé dans l'élément de blocage **40.** L'élément de blocage **40** exerce un effort sur la première partie d'extrémité **50a** de la pièce de connexion **50,** qui transmet cet effort à la seconde portion de tube **30.** Cet effort est dirigé sensiblement vers la première portion de tube **20** de sorte qu'il maintient la première portion de tube et la seconde portion de tube en position dépliée. Si un effort est exercé sur la seconde portion de tube **30,** tendant à amener cette dernière en position pliée, l'effort est transmis à l'élément de blocage **40** via la pièce de connexion **50.** Cet effort tend à rapprocher d'autant plus l'élément blocage de la seconde portion de tube et donc à maintenir ledit élément de blocage en position fermée et les première et seconde portions de tube en position dépliée.

L'élément de blocage **40** maintient donc efficacement les première et seconde portions de tube **20,30** en position dépliée, même en présence d'une force tendant à faire pivoter la seconde portion de tube **30** par rapport à la première portion de tube **20.**

Par ailleurs, Le dispositif de verrouillage **48** est automatiquement placé en position de verrouillage de sorte que l'organe d'engagement **49** coopère avec la cinquième ouverture **39** de la quatrième portion de montage **36** de la seconde portion de tube **30.** L'organe de rappel **45** permet de maintenir le dispositif de verrouillage dans la position de verrouillage. L'élément de blocage **40** est par conséquent maintenu en position fermée, de sorte qu'il ne peut pas être placé en position ouverte accidentellement.

Pour placer le dispositif de verrouillage **48** en position déverrouillée, il convient de presser la portion d'actionnement **47,** de manière à faire pivoter l'organe de rappel **45** et faire sortir l'organe d'engagement **49** de la cinquième ouverture **39.** L'élément de blocage **40** peut alors être placé en position ouverte, afin de pouvoir placer les première et seconde portions de tube **20,30** en position pliée.

Afin de placer les première et seconde portions de tube **20,30** en position pliée, l'utilisateur doit déplacer manuellement l'élément de blocage **40** de manière à le faire pivoter autour du deuxième axe de pivotement **X₂**, dans le premier sens de pivotement. Ledit élément de blocage **40** est alors éloigné de la seconde portion de tube **30.** Il franchit de nouveau le « point dur » et est ainsi amené de sa position fermée à sa position ouverte dans laquelle il autorise le pivotement de la seconde portion de tube **30** par rapport à la première portion de tube **20.** L'utilisateur peut alors faire pivoter ladite seconde portion de tube autour du premier axe de pivotement **X₁** dans un second sens de rotation, jusqu'en une position pliée.

## Revendications

1. Charnière (10) pour un vélo pliant comprenant :
- une première portion de tube (20);
- une seconde portion de tube (30) montée pivotante par rapport à la première portion de tube autour d'un premier axe de pivotement (X₁), la seconde portion de tube (30) comprenant une portion de verrouillage (36), les première et seconde portions de tube pouvant prendre une position dépliée dans laquelle elles s'étendent dans la continuité l'une de l'autre et une position pliée dans laquelle elles forment un angle aigu entre elles ;
- un élément de blocage (40) ayant une première portion d'extrémité (40a) et une seconde portion d'extrémité (40b), la première portion d'extrémité étant montée pivotante à la première portion de tube autour d'un deuxième axe de pivotement (X₂), l'élément de blocage pouvant prendre au moins une position fermée dans laquelle il maintient la première portion de tube et la seconde portion de tube en position dépliée et une position ouverte dans laquelle il permet le déplacement en position pliée des première et seconde portions de tube par pivotement de la seconde portion de tube par rapport à la première portion de tube autour du premier axe de pivotement;
- une pièce de connexion (50) ayant une première partie d'extrémité (50a) montée pivotante à la seconde portion d'extrémité de l'élément de blocage (40) autour d'un troisième axe de pivotement (X₃), la pièce de connexion ayant en outre une seconde partie d'extrémité (50b) montée pivotante à la seconde portion de tube autour d'un quatrième axe de pivotement (X₄);
- un dispositif de rappel (60) configuré pour amener l'élément de blocage de sa position ouverte vers sa position fermée ; et la charnière est **caractérisée par**
- un dispositif de verrouillage (48) présentant une position de verrouillage dans laquelle il maintient l'élément de blocage (40) en position fermée et une position déverrouillée dans laquelle il permet la mise en position ouverte de l'élément de blocage, le dispositif de verrouillage (48) étant monté sur l'élément de blocage (40) et comprenant un organe d'engagement (49) configuré pour coopérer avec la portion de verrouillage lorsque le dispositif de verrouillage est placé en position de verrouillage.

2. Charnière selon la revendication **1,** dans laquelle le premier axe de pivotement (X₁) et le deuxième axe de pivotement (X₁) sont parallèles et s'étendent de part et d'autre d'un diamètre de la première portion de tube (20).

3. Charnière selon la revendication **1** ou **2,** dans laquelle le premier axe de pivotement (X₁) et le quatrième axe de pivotement (X₄) s'étendent de part et d'autre d'un diamètre de la seconde portion de tube (30).

4. Charnière selon l'une quelconque des revendications **1** à **3,** dans laquelle l'élément de blocage (40) est sensiblement parallèle à la pièce de connexion (50) lorsque les première et seconde portions de tube (20,30) sont en position dépliée.

5. Charnière selon l'une quelconque des revendications **1** à **4,** dans laquelle les premier, deuxième, troisième et quatrième axes (X₁,X₂,X₃,X₄) de pivotement sont sensiblement parallèles entre eux.

6. Charnière selon la revendication **5,** dans laquelle, lorsque l'élément de blocage (40) est en position fermée, le premier axe de pivotement (X₁) et le troisième axe de pivotement (X₃) s'étendent d'un même côté d'un plan (P) passant par le deuxième axe de pivotement (X₂) et le quatrième axe de pivotement (X₄).

7. Charnière selon l'une quelconque des revendications **1** à **6,** dans laquelle le dispositif de rappel (60) comprend un ressort de torsion s'étendant autour du deuxième axe de pivotement (X₂) et coopérant avec la première portion de tube (10) et l'élément de blocage.

8. Charnière selon l'une quelconque des revendications **1** à **7,** dans laquelle la pièce de connexion (50) est une tige s'étendant entre l'élément de blocage (40) et la seconde portion de tube (30).

9. Charnière selon la revendication **8,** dans laquelle la pièce de connexion (50) présente une longueur réglable.

10. Charnière selon l'une quelconque des revendications **1** à **9,** dans laquelle le dispositif de verrouillage (48) comprend une portion d'actionnement (47) configurée pour placer le dispositif de verrouillage en position déverrouillée lorsqu'elle est actionnée.

11. Charnière selon la revendication **10,** dans laquelle le dispositif de verrouillage comprend un organe de rappel (45) configuré pour maintenir le dispositif de verrouillage (48) en position de verrouillage, lorsque la portion d'actionnement (47) n'est pas actionnée.

12. Tige de selle de vélo comportant au moins une charnière (10) selon l'une quelconque des revendications **1** à **11.**

13. Cadre de vélo comportant au moins une charnière (10) selon l'une quelconque des revendications **1** à **11.**

14. Guidon de vélo comportant au moins une charnière (10) selon l'une quelconque des revendications **1** à **11.**

15. Vélo comportant au moins une charnière (10) selon l'une quelconque des revendications **1** à **11.**

## Patentansprüche

1. Scharnier (10) für ein Klapprad, umfassend:
- einen ersten Rohrabschnitt (20),
- einen zweiten Rohrabschnitt (30), der in Bezug auf den ersten Rohrabschnitt um eine erste Schwenkachse (X₁) schwenkbar angebracht ist, wobei der zweite Rohrabschnitt (30) einen Verriegelungsabschnitt (36) aufweist, wobei der erste und der zweite Rohrabschnitt eine ausgeklappte Position, in der sie sich in Kontinuität zueinander erstrecken, und eine zusammengeklappte Position einnehmen können, in der sie zwischen sich einen spitzen Winkel bilden,
- ein Blockierelement (40), das einen ersten Endabschnitt (40a) und einen zweiten Endabschnitt (40b) aufweist, wobei der erste Endabschnitt schwenkbar an dem ersten Rohrabschnitt um eine zweite Schwenkachse (X₂) angebracht ist, wobei das Blockierelement mindestens eine geschlossene Position, in der es den ersten Rohrabschnitt und den zweiten Rohrabschnitt in der ausgeklappten Position hält, und eine offene Position einnehmen kann, in der es die Bewegung in die zusammengeklappte Position des ersten und zweiten Rohrabschnitts durch Schwenken des zweiten Rohrabschnitts relativ zum ersten Rohrabschnitt um die erste Schwenkachse ermöglicht,
- ein Verbindungsstück (50), das einen ersten Endabschnitt (50a) aufweist, der schwenkbar an dem zweiten Endabschnitt des Blockierelements (40) um eine dritte Schwenkachse (X₃) angebracht ist, wobei das Verbindungsstück ferner einen zweiten Endabschnitt (50b) aufweist, der schwenkbar an dem zweiten Rohrabschnitt um eine vierte Schwenkachse (X₄) angebracht ist,
- eine Rückstellvorrichtung (60), die konfiguriert ist, um das Verriegelungselement aus seiner offenen Position in seine geschlossene Position zu bringen,
wobei das Scharnier **gekennzeichnet ist durch**
- eine Verriegelungsvorrichtung (48), die eine Verriegelungsposition, in der sie das Blockierelement (40) in der geschlossenen Position hält, und eine entriegelte Position aufweist, in der sie ermöglicht, das Blockierelement in die offene Position zu bringen, wobei die Verriegelungsvorrichtung (48) auf dem Blockierelement (40) angebracht ist und ein Eingriffselement (49) aufweist, das konfiguriert ist, um mit dem Verriegelungsabschnitt zusammenzuwirken, wenn die Verriegelungsvorrichtung in Verriegelungsposition gebracht ist.

2. Scharnier nach Anspruch 1, wobei die erste Schwenkachse (X₁) und die zweite Schwenkachse (X₁) parallel sind und sich auf beiden Seiten eines Durchmessers des ersten Rohrabschnitts (20) erstrecken.

3. Scharnier nach Anspruch 1 oder 2, wobei sich die erste Schwenkachse (X₁) und die vierte Schwenkachse (X₄) auf beiden Seiten eines Durchmessers des zweiten Rohrabschnitts (30) erstrecken.

4. Scharnier nach einem der Ansprüche 1 bis 3, wobei das Blockierelement (40) im Wesentlichen parallel zum Verbindungsstück (50) ist, wenn sich der erste und der zweite Rohrabschnitt (20, 30) in der ausgeklappten Position befinden.

5. Scharnier nach einem der Ansprüche 1 bis 4, wobei die erste, zweite, dritte und vierte Schwenkachse (X₁, X₂, X₃, X₄) im Wesentlichen parallel zueinander sind.

6. Scharnier nach Anspruch 5, wobei sich, wenn sich das Blockierelement (40) in der geschlossenen Position befindet, die erste Schwenkachse (X₁) und die dritte Schwenkachse (X₃) auf einer gleichen Seite einer durchgehenden Ebene (P) erstrecken, die durch die zweite Schwenkachse (X₂) und die vierte Schwenkachse (X₄) verläuft.

7. Scharnier nach einem der Ansprüche 1 bis 6, wobei die Rückstellvorrichtung (60) eine Torsionsfeder aufweist, die sich um die zweite Schwenkachse (X₂) erstreckt und mit dem ersten Rohrabschnitt (10) und dem Blockierelement zusammenwirkt.

8. Scharnier nach einem der Ansprüche 1 bis 7, wobei das Verbindungsstück (50) eine Stange ist, die sich zwischen dem Blockierelement (40) und dem zweiten Rohrabschnitt (30) erstreckt.

9. Scharnier nach Anspruch 8, wobei das Verbindungsstück (50) eine einstellbare Länge aufweist.

10. Scharnier nach einem der Ansprüche 1 bis 9, wobei die Verriegelungsvorrichtung (48) einen Betätigungsabschnitt (47) aufweist, der konfiguriert ist, um die Verriegelungsvorrichtung in die entriegelte Position zu bringen, wenn sie betätigt wird.

11. Scharnier nach Anspruch 10, wobei die Verriegelungsvorrichtung ein Rückstellorgan (45) aufweist, das konfiguriert ist, um die Verriegelungsvorrichtung (48) in der Verriegelungsposition zu halten, wenn der Betätigungsabschnitt (47) nicht betätigt wird.

12. Fahrradsattelstütze, umfassend mindestens ein Scharnier (10) nach einem der Ansprüche 1 bis 11.

13. Fahrradrahmen, umfassend mindestens ein Scharnier (10) nach einem der Ansprüche 1 bis 11.

14. Fahrradlenker, umfassend mindestens ein Scharnier (10) nach einem der Ansprüche 1 bis 11.

15. Fahrrad, umfassend mindestens ein Scharnier (10) nach einem der Ansprüche 1 bis 11.

## Claims

1. A hinge (10) for a folding bicycle comprising:
- a first tubular portion (20);
- a second tubular portion (30) mounted pivoting relative to the first tubular portion around a first pivoting axis (X₁), the second tubular portion (30) comprising a locking portion (36), the second the first and second tubular portions being able to assume an unfolded position in which they extend in the continuation of one another and a folded position in which they form an acute angle between them;
- a blocking element (40) having a first end portion (40a) and a second end portion (40b), the first end portion being mounted pivoting on the first tubular portion around a second pivoting axis (X₂), the blocking element being able to assume at least one closed position in which it retains the first tubular portion and the second tubular portion in the unfolded position and an open position in which it allows the movement into the folded position of the first and second tubular portions by pivoting of the second tubular portion relative to the first tubular portion around the first pivoting axis;
- a connection part (50) having a first end portion (50a) mounted pivoting on the second end portion of the blocking element (40) around a third pivoting axis (X₃), the connection part further having a second end portion (50b) mounted pivoting on the second tubular portion around a fourth pivoting axis (X₄);
- a return device (60) configured to bring the blocking element from its open position to its closed position;
and the hinge is **characterized by** a locking device (48) having a locked position in which it retains the blocking element (40) in the closed position and an unlocked position in which it allows the blocking element to be placed in the open position, the locking device (48) being mounted on the blocking element (40) and comprising an engagement member (49) configured to cooperate with the locking portion when the locking device is placed in the locked position.

2. The hinge according to claim **1,** wherein the first pivoting axis (X₁) and the second pivoting axis (X₂) are parallel and extend on either side of a diameter of the first tubular portion (20).

3. The hinge according to claim **1** or **2,** wherein the first pivoting axis (X₁) and the fourth pivoting axis (X₄) extend on either side of a diameter of the second tubular portion (30).

4. The hinge according to any one of claims **1** to **3,** wherein the blocking element (40) is substantially parallel to the connection part (50) when the first and second tubular portions (20, 30) are in the unfolded position.

5. The hinge according to any one of claims **1** to **4,** wherein the first, second, third and fourth pivoting axes (X₁, X₂, X₃, X₄) are substantially parallel to one another.

6. The hinge according to claim **5,** wherein, when the blocking element (40) is in the closed position, the first pivoting axis (X₁) and the third pivoting axis (X₃) extend on the same side of a plane (P) passing through the second pivoting axis (X₂) and the fourth pivoting axis (X₄).

7. The hinge according to any one of claims **1** to **6,** wherein the return device (60) comprises a torsion spring extending around the second pivoting axis (X₂) and cooperating with the first tubular portion (10) and the blocking element.

8. The hinge according to any one of claims **1** to **7,** wherein the connection part (50) is a stem extending between the blocking element (40) and the second tubular portion (30).

9. The hinge according to claim **8,** wherein the connection part (50) has an adjustable length.

10. The hinge according to any one of claims **1** to **9,** wherein the locking device (48) comprises an actuating portion (47) configured to place the locking device in the unlocked position when it is actuated.

11. The hinge according to claim **10,** wherein the locking device comprises a return member (45) configured to retain the locking device (48) in the locked position, when the actuating portion (47) is not actuated.

12. A bicycle saddle stem including at least one hinge (10) according to any one of claims **1** to **11.**

13. A bicycle frame comprising at least one hinge (10) according to any one of claims 1 to **11.**

14. A bicycle handlebar including at least one hinge (10) according to any one of claims **1** to **11.**

15. A bicycle including at least one hinge (10) according to any one of claims **1** to **11.**
